# FASCICULE DE BREVET EUROPEEN

(11) **EP 0 630 330 B1**
(45) Date de publication et mention de la délivrance du brevet: **12.06.1996**
(21) Numéro de dépôt: 94904647.8
(22) Date de dépôt: 10.01.1994
(51) Int. Cl.: B60K 15/035, F02M 25/08

(54) **DISPOSITIF DE RECUPERATION DE VAPEURS ISSUES D'UN RESERVOIR DE CARBURANT DE VEHICULE AUTOMOBILE**
VORRICHTUNG ZUR RÜCKGEWINNUNG VON DÄMPFEN, WELCHE AUS DEM KRAFTSTOFFTANK EINES KRAFTFAHRZEUGES AUSTRETEN
DEVICE FOR RECOVERING VAPOURS FROM A MOTOR VEHICLE FUEL TANK

(30) Priorité: 19.01.1993 FR 9300570
(43) Date de publication de la demande: 28.12.1994
(73) Titulaire: SIEMENS AUTOMOTIVE S.A., F-31036 Toulouse Cédex (FR)
(72) Inventeur: BRUN, François, F-31100 Toulouse (FR); TARROUX, Francis, F-31120 Pinsaguel (FR)
(74) Mandataire: Fuchs, Franz-Josef, Dr.-Ing.
(86) Numéro de dépôt international: EP9400043
(87) Numéro de publication internationale: WO9416915

(56) Documents cités:
- DE-A- 4 003 751
- FR-A- 2 635 823

## Description

La présente invention est relative à un dispositif de récupération des vapeurs issues du réservoir de carburant d'un véhicule automobile propulsé par un moteur à combustion interne, et, plus particulièrement à un tel dispositif adapté pour permettre d'en tester l'étanchéité.

Les véhicules automobiles actuels sont couramment équipés de dispositifs propres à empêcher que des vapeurs de carburant générées dans le réservoir ne soient répandues dans l'atmosphère, afin de imiter la pollution de celle-ci par les hydrocarbures. On emploie à cet effet une cartouche filtrante reliée au réservoir de carburant dans laquelle les hydrocarbures contenus dans les vapeurs issues du réservoir de carburant sont séparés de l'air par une ou plusieurs couches de charbon actif. Afin d'éviter la saturation de cette cartouche filtrante, on la régénère au moyen d'un balayage périodique par de l'air atmosphérique aspiré dans la cartouche par un orifice de mise à l'air libre sous l'effet d'une dépression appliquée à un troisième orifice relié au collecteur d'admission du moteur à combustion interne via une électrovanne de commande de purge.

Certaines réglementations, et notamment celles de l'administration californienne CARB exigent que la fonction d'un tel dispositif puisse être testée afin qu'une défaillance comme par exemple un défaut d'étanchéité du dispositif soit signalée au conducteur du véhicule.

On connaît de la technique antérieure, par exemple du brevet français 2 635 823, un dispositif de récupération des vapeurs de carburant, constitué d'un réservoir de carburant, d'une cartouche filtrante reliée par un premier conduit audit réservoir et par un deuxième conduit à une électrovanne de purge mettant en communication la cartouche avec la dépression qui règne dans le collecteur d'admission du moteur, dans lequel on diagnostique l'absence de fuites dans le circuit en mesurant la dépression qui s'établit dans le réservoir lors d'une phase de purge. On connaît également du brevet allemand DE 40 03 751 un tel dispositif dans lequel la cartouche filtrante est munie, sur son orifice de mise à l'air libre, d'une électrovanne de blocage permettant d'isoler le dispositif de l'air ambiant afin de diagnostiquer des fuites encore plus faibles. Cependant de tels dispositifs présentent l'inconvénient, lors du test d'étanchéité du circuit, d'introduire dans le collecteur d'admission du moteur un mélange de vapeurs de carburant susceptible de perturber gravement le fonctionnement des dispositifs de contrôle de la richesse du mélange air / carburant fourni au moteur. En effet, l'introduction de vapeurs fortement chargées en carburant, comme c'est le cas lorsque la cartouche est proche de la saturation, augmente la richesse en carburant du mélange admis dans la chambre de combustion et conduit alors soit à un excès de pollution, soit, dans le cas de systèmes d'alimentation en boucle fermée par rapport à la richesse du mélange, à une réduction importante de la quantité de carburant injectée. Dans ce cas, lors de la fin du test, la suppression de cet apport de vapeurs conduit à un mélange trop pauvre en carburant pouvant provoquer des ratés de combustion et des à-coups moteur préjudiciables à la conduite.

La présente invention a donc pour but de fournir un dispositif de récupération de vapeurs de carburant permettant d'effectuer un test d'étanchéité du dispositif sans présenter les inconvénients de la technique antérieure.

On atteint ces buts de l'invention, ainsi que d'autres qui apparaîtront dans la suite de la présente description avec un dispositif de récupération de vapeurs issues d'un réservoir de carburant d'un véhicule automobile, comprenant notamment une cartouche de récupération des vapeurs par filtrage comportant un orifice de purge, un orifice d'entrée relié au réservoir de carburant et un orifice de mise à l'air libre pour l'évacuation des vapeurs filtrées vers l'atmosphère, et une électrovanne de contrôle de purge de la cartouche reliée par un premier orifice au collecteur d'admission d'un moteur à combustion interne, et par un second orifice à l'orifice de purge de la cartouche par un conduit de purge.

Selon l'invention, ce dispositif comprend des moyens permettant de connecter sélectivement l'orifice de mise à l'air libre de la cartouche à l'atmosphère ou au second orifice de l'électrovanne de purge afin d'établir une dépression contrôlée dans le dispositif sans perturber le réglage du mélange air/carburant fourni au moteur.

Suivant un premier mode de réalisation de la présente invention, les moyens permettant de connecter sélectivement l'orifice de mise à l'air libre de la cartouche à l'atmosphère ou au second orifice de l'électrovanne de purge sont constitués par un distributeur pneumatique à trois voies.

Suivant un deuxième mode de réalisation de la présente invention, les moyens permettant de connecter sélectivement l'orifice de mise à l'air libre de la cartouche à l'atmosphère ou au second orifice de l'électrovanne de purge sont constitués par un distributeur à quatre voies connectant simultanément le second orifice de l'électrovanne de purge à l'orifice de purge de la cartouche et l'orifice de mise à l'air libre à l'atmosphère, en position repos, ou reliant ledit second orifice à l'orifice de mise à l'air libre et obturant simultanément le conduit relié à l'orifice de purge de la cartouche en position travail, respectivement.

D'autres caractéristiques et avantages du circuit suivant l'invention apparaîtront à la lecture de la description qui va suivre et à l'examen du dessin annexé dans lequel:
- la figure 1 représente un schéma d'un premier mode de réalisation du dispositif selon l'invention,
- la figure 2 représente un schéma d'une variante du dispositif de la figure 1, et
- la figure 3 représente un schéma d'un deuxième mode, préféré, de réalisation du dispositif selon l'invention.

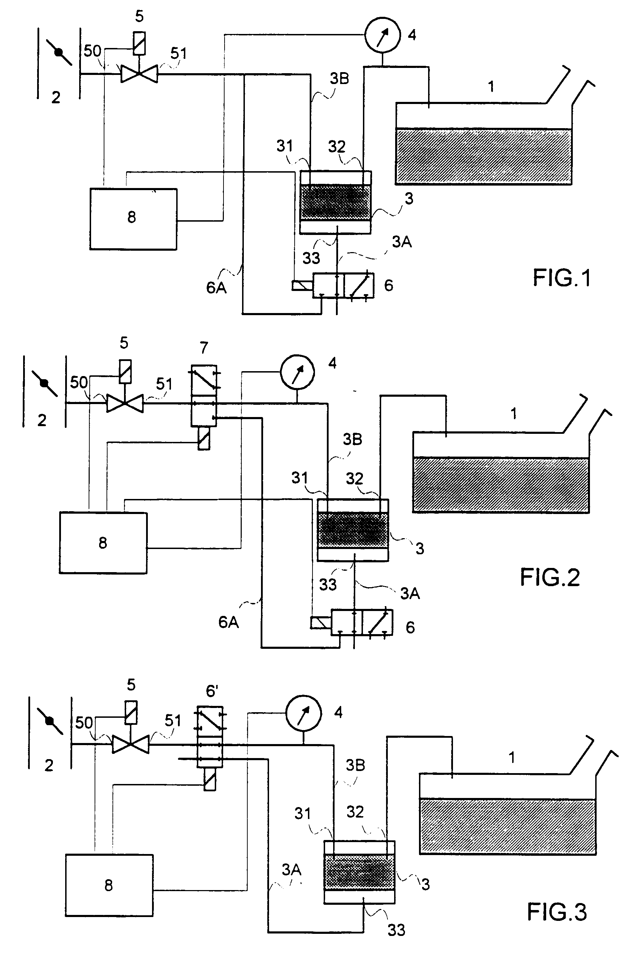

On se réfère à la figure 1 dans laquelle on a représenté un réservoir de carburant 1 relié à une cartouche filtrante 3 par un conduit aboutissant à un orifice d'entrée 32 de la cartouche. Un capteur de pression 4 est branché sur ce conduit entre le réservoir et la cartouche. L'orifice de purge 31 de la cartouche est connecté à un orifice 51 d'une électrovanne de purge 5 par un conduit 3B. Le second orifice 50 de l'électrovanne 5 est relié au collecteur d'admission 2 d'un moteur à combustion interne, non représenté. L'orifice de mise à l'air libre 33 de la cartouche est relié par un conduit 3A à un premier orifice d'un distributeur trois voies à deux positions 6. En position repos le distributeur 6 établit une liaison entre ce premier orifice et un second orifice ouvert à l'atmosphère ambiante, tout en obturant le troisième orifice. Ce troisième orifice est relié par un conduit 6A au conduit 3B en un point situé entre l'orifice de purge 31 de la cartouche et l'orifice 51 de l'électrovanne de purge 5. Les solénoïdes de commande de l'électrovanne 5 et du distributeur 6 sont électriquement reliés à un calculateur de commande 8 adapté pour leur fournir les signaux de commande de commutation appropriés. Le calculateur de commande 8 est également relié au capteur de pression 4 par une liaison électrique lui permettant de recevoir la valeur de la pression mesurée par le capteur.

Dans l'état initial du dispositif, l'électrovanne 5 est fermée et le distributeur 6 est dans sa position de repos. Lorsqu'un test d'étanchéité du dispositif doit être effectué, le calculateur 8 commande le passage du distributeur 6 de la position repos à la position travail, connectant ainsi l'orifice de mise à l'air libre 33 de la cartouche, par l'intermédiaire des conduits 3A et 6A , au conduit 3B. Le calculateur 8 commande alors l'ouverture de l'électrovanne de purge 5, permettant ainsi à la dépression qui règne dans le collecteur d'admission 2 du moteur, de s'établir dans la cartouche 3 et dans le réservoir 1. Cette dépression est alors mesurée par le capteur 4 qui renseigne le calculateur 8 sur sa valeur. Lorsque celle-ci atteint ou dépasse une valeur prédéterminée, le calculateur 8 ferme l'électrovanne 5, isolant ainsi l'ensemble du dispositif tant de la source de dépression que de la pression atmosphérique. Il suffit alors, comme cela est connu de la technique antérieure, de surveiller l'évolution de la pression dans le dispositif en fonction du temps, par exemple, pour pouvoir diagnostiquer une fuite éventuelle du dispositif.

On remarque que lors de l'établissement de la dépression dans le dispositif, les gaz drainés vers le collecteur d'admission 2 proviennent en quantités sensiblement égales de l'orifice de purge 31 et de l'orifice de mise à l'air libre 33. Or, comme les gaz provenant de l'orifice de mise à l'air libre 33 ont traversé la cartouche filtrante, ils ont été débarrassés de leur teneur en hydrocarbures. De ce fait, la teneur en carburant des gaz drainés dans le collecteur d'admission du moteur est sensiblement réduite, diminuant ainsi les perturbations qui peuvent être occasionnées aux dispositifs de réglage de la richesse du mélange combustible.

On va maintenant décrire, en relation avec la figure 2, une variante du dispositif de la figure 1. Dans la description qui va suivre, les repères numériques repris de la figure 1 correspondent à des organes identiques ou similaires.

Il apparaît sur cette figure 2 que la liaison entre le conduit 6A issu du distributeur 6 et le conduit 3B reliant l'orifice de purge 31 de la cartouche à l'orifice 51 de l'électrovanne de purge 5 est maintenant réalisée par un deuxième distributeur pneumatique trois voies à deux positions 7. Ce distributeur 7 relie, en position repos, l'orifice 51 de l'électrovanne de purge 5 au conduit 3B issu de l'orifice de purge 31, tout en obturant l'extrémité du conduit 6A opposée au premier distributeur 6. En position travail, le distributeur 7 relie l'orifice 51 de l'électrovanne de purge 5 à l'extrémité du conduit 6A opposée au premier distributeur 6, tout en obturant l'extrémité du conduit 3B opposée à l'orifice de purge 31 de la cartouche. Le solénoïde de commande du distributeur 7 est relié électriquement au calculateur 8.

Dans l'état initial du dispositif, l'électrovanne 5 est fermée et les distributeurs 6 et 7 sont dans leur position de repos. Lorsqu'un test d'étanchéité du dispositif doit être effectué, le calculateur 8 commande le passage du distributeur 6 de la position repos à la position travail, connectant ainsi l'orifice de mise à l'air libre 33 de la cartouche, par l'intermédiaire des conduits 3A et 6A, au distributeur 7. Le calculateur 8 commande simultanément le passage du distributeur 7 de la position repos à la position travail, connectant ainsi le conduit 6A à l'orifice 51 de l'électrovanne 5 et obturant le conduit 3B. Le calculateur 8 commande alors l'ouverture de l'électrovanne de purge 5, permettant ainsi à la dépression qui règne dans le collecteur d'admission 2 du moteur, de s'établir dans la cartouche 3 et dans le réservoir 1. On remarque alors que la dépression s'établit dans le dispositif par l'intermédiaire des conduits 3A et 6A exclusivement, aboutissant à l'orifice de mise à l'air libre 33, ce qui entraîne que les gaz drainés vers le collecteur d'admission 2 du moteur sont des gaz exempts de vapeurs de carburant. Cette dépression est alors mesurée par le capteur 4 qui renseigne le calculateur 8 sur sa valeur. Lorsque celle-ci atteint ou dépasse une valeur prédéterminée, le calculateur 8 ferme l'électrovanne 5, isolant ainsi l'ensemble du dispositif tant de la source de dépression que de la pression atmosphérique. La procédure de test se poursuit alors comme décrit précédemment en liaison avec la figure 1.

Suivant une caractéristique avantageuse de la présente invention, le capteur de pression 4 est maintenant relié au conduit 3B entre le distributeur 7 et l'orifice de purge 31. Cette disposition présente l'avantage de permettre une mesure de la pression plus fiable en éliminant les fluctuations de pression qui peuvent être entraînées par les mouvements du carburant dans le réservoir, particulièrement sensibles lorsque celui-ci est plein. Cette disposition présente en outre l'avantage de filtrer la dépression mesurée par le capteur. En effet, le conduit 3B étant obturé par le distributeur 7, la dépression mesurée par le capteur s'établit au travers de la cartouche dont la capacité et la restriction imposée par les couches de charbon actif se comportent comme un filtre passe-bas.

Selon un mode de réalisation préféré de l'invention que l'on va maintenant décrire en relation avec la figure 3, on a regroupé les fonctions des distributeurs 6 et 7 dans un distributeur pneumatique quatre voies à deux positions 6'. Ce distributeur à quatre voies 6' relie, en position repos, l'extrémité du conduit 3B opposée à l'orifice de purge 31 de la cartouche avec l'orifice 51 de l'électrovanne de purge 5 par deux de ses voies, d'une part, et l'extrémité du conduit 3A opposée à l'orifice de mise à l'air libre 33 de la cartouche avec l'atmosphère par ses deux autres voies, d'autre part. En position travail, le distributeur 6' relie l'extrémité du conduit 3A opposée à l'orifice de mise à l'air libre 33 de la cartouche avec l'orifice 51 de l'électrovanne de purge 5 et obture les deux autres voies, et plus particulièrement l'extrémité du conduit 3B opposée à l'orifice de purge 31 de la cartouche. Le solénoïde de commande du distributeur 6' est relié électriquement au calculateur 8.

On conçoit alors que lors d'un test d'étanchéité du dispositif, le calculateur 8 commande le passage du distributeur 6' en position travail, puis ouvre l'électrovanne 5. La dépression du collecteur d'admission s'établit alors dans le dispositif au travers du conduit 3A relié à l'orifice de mise à l'air libre 33 de la cartouche. De même que précédemment, les gaz drainés vers le collecteur d'admission sont alors exempts de vapeurs de carburant. Le conduit 3B étant obturé par le distributeur 6', la dépression mesurée par le capteur 4 présente les mêmes caractéristiques avantageuses que celles décrites à la figure 2. A la fermeture de l'électrovanne 5, commandée par le calculateur lorsque la dépression atteint un seuil prédéterminé, l'ensemble du dispositif situé entre l'électrovanne 5 et le réservoir est en dépression et isolé de la pression atmosphérique. L'observation de la pression dans le dispositif permet alors classiquement de conclure à l'absence de fuite si celle-ci reste stable.

Un tel dispositif permet donc d'atteindre les buts de l'invention tout en n'exigeant qu'un seul distributeur, et par voie de conséquence, qu'une seule sortie de commande du calculateur, ce qui le rend particulièrement économique.

## Revendications

1. Dispositif de récupération de vapeurs issues d'un réservoir de carburant d'un véhicule automobile, comprenant notamment:
• une cartouche de récupération des vapeurs par filtrage (3) comportant:
- un orifice de purge (31)
- un orifice d'entrée (32) relié au réservoir de carburant (1)
- un orifice de mise à l'air libre (33) pour l'évacuation des vapeurs filtrées vers l'atmosphère,
• une électrovanne de contrôle de purge (5) de la cartouche reliée
- par un premier orifice (50) au collecteur d'admission (2) d'un moteur à combustion interne, et
- par un second orifice (51) à l'orifice de purge (31) de la cartouche par un conduit de purge (3B)
ce dispositif étant caractérisé en ce qu'il comprend des moyens (6,6') permettant de connecter sélectivement l'orifice de mise à l'air libre (33) de la cartouche à l'atmosphère ou au second orifice (51) de l'électrovanne de purge (5) afin d'établir une dépression contrôlée dans le dispositif sans perturber le réglage du mélange air/carburant fourni au moteur.

2. Dispositif selon la revendication 1 caractérisé en ce que les moyens (6,6') sont constitués par un premier distributeur à trois voies (6).

3. Dispositif selon la revendication 2, caractérisé en ce qu'un capteur de dépression (4) est connecté au conduit reliant la cartouche au réservoir.

4. Dispositif selon la revendication 1 ou 2, caractérisé en ce qu'il comporte en outre un second distributeur à trois voies (7) connectant le second orifice (51) de l'électrovanne (5):
• à l'orifice de purge (31) de la cartouche par le conduit de purge (3B) en position repos, ou
• à l'orifice de mise à l'air libre (33) par l'intermédiaire du distributeur (6) et obturant simultanément le conduit (3B) en position travail, respectivement.

5. Dispositif selon la revendication 1, caractérisé en ce que les moyens (6,6') sont constitués par un distributeur à quatre voies (6')
• connectant simultanément le second orifice (51) de l'électrovanne (5) à l'orifice de purge (31) de la cartouche et l'orifice de mise à l'air libre (33) à l'atmosphère, en position repos, ou
• reliant ledit second orifice (51) à l'orifice de mise à l'air libre (33) et obturant simultanément le conduit (3B) en position travail, respectivement.

6. Dispositif selon la revendication 4 ou 5, caractérisé en ce que le capteur de dépression (4) est connecté sur le conduit (3B) reliant la cartouche (3) au distributeur (6',7)

## Claims

1. Device for recovering the vapours leaving a fuel tank of a motor vehicle, comprising in particular:
• a canister (3) for recovering vapours by filtering, comprising:
- a purge orifice (31)
- an inlet orifice (32) connected to the fuel tank (1)
- an atmospheric connection orifice (33) for discharging the filtered vapours to the atmosphere,
• a control solenoid valve (5) for purging the canister, connected
- by a first orifice (50) to the intake manifold (2) of an internal combustion engine, and
- by a second orifice (51) to the purge orifice (31) of the canister via a purge duct (3B)
this device being characterized in that it comprises means (6, 6') allowing the atmospheric connection orifice (33) of the canister to be connected selectively to the atmosphere or to the second orifice (51) of the purge solenoid valve (5) in order to set up a controlled partial vacuum in the device without disturbing the regulation of the air/fuel mixture supplied to the engine.

2. Device according to Claim 1, characterized in that the means (6, 6') consist of a first three-way distributor (6).

3. Device according to Claim 2, characterized in that a partial-vacuum sensor (4) is connected to the duct connecting the canister to the tank.

4. Device according to Claim 1 or 2, characterized in that it further comprises a second three-way distributor (7) connecting the second orifice (51) of the solenoid valve (5):
• to the purge orifice (31) of the canister via the purge duct (3B) in the rest position, or
• to the atmospheric connection orifice (33) via the distributor (6) and simultaneously closing the duct (3B) in the working position, respectively.

5. Device according to Claim 1, characterized in that the means (6, 6') consist of a four-way distributor (6')
• simultaneously connecting the second orifice (51) of the solenoid valve (5) to the purge orifice (31) of the canister and the atmospheric connection orifice (33) to the atmosphere, in the rest position, or
• connecting the said second orifice (51) to the atmospheric connection orifice (33) and simultaneously closing the duct (3B) in the working position, respectively.

6. Device according to Claim 4 or 5, characterized in that the partial-vacuum sensor (4) is connected on the duct (3B) connecting the canister (3) to the distributor (6', 7).

## Patentansprüche

1. Vorrichtung zur Wiedergewinnung von Dämpfen, die aus dem Kraftstofftank eines Kraftfahrzeuges austreten, mit:
einem Einsatz zur Wiedergewinnung der Dämpfe durch Filtrierung (3) mit:
- einer Ablaßöffnung (31)
- einer Einlaßöffnung (32), die mit dem Kraftstofftank (1) verbunden ist
- einer Belüftungsöffnung (33) zum Absaugen der gefilterten Dämpfe in die Atmosphäre
einem Magnetventil (5) zur Steuerung der Spülung des Einsatzes, das verbunden ist
- durch eine erste Öffnung (50) mit dem Saugrohr (2) einer Brennkraftmaschine und
- durch eine zweite Öffnung (51) mit der Ablaßöffnung (31) des Einsatzes durch eine Ablaßleitung (3B),
wobei diese Vorrichtung dadurch gekennzeichnet ist, daß sie Mittel (6,6') aufweist, die eine wahlweise Verbindung der Belüftungsöffnung (33) des Einsatzes mit der Atmosphäre oder mit der zweiten Öffnung (51) des Magnetventils (5) erlaubt, um in der Vorrichtung einen kontrollierten Unterdruck herzustellen, ohne die Regelung des dem Motor Zugeführten Luft/Kraftstoff-Gemisches zu stören.

2. Vorrichtung nach Anspruch 1, dadurch gekennzeichnet, daß die Mittel (6,6') von einem ersten Dreiwege-Ventil (6) gebildet werden.

3. Vorrichtung nach Anspruch 2, dadurch gekennzeichnet, daß ein Unterdruckfühler (4) an der den Einsatz mit dem Tank verbindenden Leitung angeschlossen ist.

4. Vorrichtung nach Anspruch 1 oder 2, dadurch gekennzeichnet, daß sie ferner ein zweites Dreiwegeventil (7) aufweist, das die zweite Öffnung (51) des Magnetventils (5)
in der Ruhestellung mit der Ablaßöffnung (31) des Einsatzes durch die Ablaßleitung (3B) verbindet bzw.
in der Arbeitsatellung mit der Belüftungsöffnung (33) über das Ventil (6) verbindet und gleichzeitig die Leitung (3B) verschließt.

5. Vorrichtung nach Anspruch 1, dadurch gekennzeichnet, daß die Mittel (6,6') von einem Vierwegeventil (6') gebildet werden,
das in der Ruhestellung gleichzeitig die zweite Öffnung (51) des Magnetventils (5) mit der Ablaßöffnung (31) des Einsatzes und die Belüftungsöffnung (33) mit der Atmosphäre verbindet bzw.
das in der Arbeitsstellung die zweite Öffnung (51) mit der Belüftungsöffnung (33) verbindet und gleichzeitig die Leitung (3B) verschließt.

6. Vorrichtung nach Anspruch 4 oder 5, dadurch gekennzeichnet, daß der Unterdruckfühler (4) an der den Einsatz (3) mit dem Ventil (6',7) verbindenden Leitung (3B) angeschlossen ist.
